# EUROPEAN PATENT SPECIFICATION

(11) **EP 3 612 592 B1**
(45) Date of publication and mention of the grant of the patent: **18.11.2026**
(21) Application number: 18717089.9
(22) Date of filing: 19.04.2018
(51) Int. Cl.: C08L 81/04, C08L 27/16, C08K 3/22

(54) **POLYMER ALLOY COMPRISING A SULPHUR-CONTAINING AROMATIC POLYMER AND A THERMOPLASTIC VULCANIZATE**
POLYMERLEGIERUNG MIT EINEM AROMATISCHEN SCHWEFELHALTIGEN POLYMER UND EIN THERMOPLASTISCHES VULKANISAT
ALLIAGE DE POLYMÈRE COMPRENANT UN POLYMÈRE AROMATIQUE CONTENANT DU SOUFRE ET UN VULCANISAT THERMOPLASTIQUE

(30) Priority: 21.04.2017 EP 17167521
(43) Date of publication of application: 26.02.2020
(73) Proprietor: Syensqo Specialty Polymers Italy S.p.A., 20021 Bollate (MI) (IT)
(72) Inventor: SANGUINETI, Aldo, 20133 Milano (IT); MIRENDA, Marco, 20017 Rho (MI) (IT)
(74) Representative: Ferri, Isabella
(86) International application number: PCT/EP2018/059995
(87) International publication number: WO 2018/193019

(56) References cited:
- EP-A1- 2 949 705
- EP-A2- 0 431 470
- US-A- 4 395 512
- DE CSERNATONY ET AL: "The properties of Viton ''A'' elastomers III. Steady state and transient activated gas emission processes from Viton ''A''", VACUUM, PERGAMON PRESS, GB, vol. 16, no. 5, 1 May 1966 (1966-05-01), pages 247 - 251, XP025619864, ISSN: 0042-207X, [retrieved on 19660501], DOI: 10.1016/0042-207X(66)92715-1

## Description

### Technical Field

The present invention relates to a polymer alloy comprising a sulphur-containing aromatic polymer and at least one thermoplastic vulcanizate which has an improved dispersibility, to a process for the preparation thereof and to articles comprising the same.

### Background Art

Sulphur-containing aromatic polymer such as polyarylene sulfides and polyarylsulfones are thermally stable engineering plastics consisting mainly of phenyl or biphenyl groups linked by sulfide, ether and/or sulfone groups. Those materials have excellent heat resistance and chemical resistance. However, they have poor mechanical properties, in particular impact resistance.

There has long been interest in improving the mechanical properties of sulphur-containing aromatic polymers.

Blending sulphur-containing aromatic polymers with fluorine-containing polymers can produce novel materials combining the performances and properties of both classes.

It has already been proposed to mix polyphenylene sulfide (PPS) with a fluorine-containing thermoplastic elastomer with the aim of improving the properties of said polyphenylene sulphide.

For instance, EP2949705 (TORAY INDUSTRIES, INC) discloses certain blends of polyphenylene sulfide with at least one fluororesin such as a tetrafluoroethylene/hexafluoropropylene copolymer or a tetrafluoroethylene/perfluoro(alkyl vinyl ether) copolymer. Such blends show improved physical and mechanical properties.

Blends of sulphur-containing aromatic polymers with fluorine-containing polymers tend however to have morphology with large regions or domains of the individual polymers rather than fine, well-dispersed domains. The large domains tend to produce a material with poor mechanical properties, e.g. injection molded parts having poor tensile properties.

Thermoplastic vulcanizates are vulcanized thermoplastic elastomers where cross-linked rubber forms a dispersed, particulate, elastomeric phase within a thermoplastic phase of a stiff thermoplastic such that thermoplastic properties are achieved. Thermoplastic vulcanizates are conventionally produced by dynamic crosslinking whereby a rubber component is crosslinked, or vulcanized, under intensive shear and mixing conditions within a blend of at least one non-vulcanizing thermoplastic polymer component at or above the melting point of that thermoplastic. Typically, the rubber component forms cross-linked, elastomeric particles dispersed uniformly in the thermoplastic.

Within this frame, US5470901 (DAIKIN INDUSTRIES LTD.) discloses the preparation of a resin including a thermoplastic polyphenylene sulfide and a fluorine-containing elastomer, said resin being prepared by a dynamic crosslinking method that comprises melt mixing a polyphenylene sulfide with a terpolymer of vinilydene fluoride, hexafluoropropylene and tetrafluoroethylene at a temperature of about 300°C in the presence of a crosslinking agent and a crosslinking aid. The polyphenylene sulfide resin thus obtained is characterized by an improved impact strength in comparison with blends of PPS with the fluorine-containing elastomer which have not been crosslinked. However, in order to obtain an improved impact strength and a suitable stiffness, a high amount of glass fibers are added to the resin during the process.

US4395512 (SHINETSU CHEMICAL CO) discloses a resin composition which comprises 100 parts by weight of a polyphenylenesulfide resin, from 10 to 300 parts by weight of an inorganic filler and from 1 to 100 parts by weight of a fluorine-containing rubber such as a copolymer of vinylidene fluoride and hexafluoropropylene having specified Mooney viscosity.

Thermoplastic vulcanizates (TPV) including both a thermoplastic fluorinated polymer continuous phase and fluorine-containing elastomer dispersed phase have attracted great deal of attention for providing high level of chemical resistance with the advantages of thermoplastic processability.

The Applicant has surprisingly found that certain thermoplastic vulcanizates including both a thermoplastic fluorinated polymer continuous phase and fluorine-containing elastomer dispersed phase can be blended with sulphur-containing aromatic polymers to produce alloys wherein the components of the alloys are uniformly dispersed. The polymer alloys thus obtained are characterized by having improved mechanical properties.

### Summary of invention

A first object of the present invention provides a polymer alloy (PA) as defined by the claims and comprising:
- (a) a sulphur-containing aromatic polymer [aromatic polymer (A)]; and
- (b) a thermoplastic vulcanizate fluorine-containing composition [vulcanizate (C)] comprising a continuous thermoplastic fluoropolymer phase and a dispersed vulcanized fluoroelastomer phase, said composition comprising:
   - i) at least one thermoplastic fluoropolymer [polymer (F)]; and
   - ii) at least one (per)fluoroelastomer [elastomer (E)].

The Applicant has also surprisingly found that the compatibilization of the components of the polymer alloy can further significantly be improved by the addition of a copolymer (CO) comprising recurring units derived from vinylidene fluoride (VDF) and recurring units derived from chlorotrifluoroethylene (CTFE).

Another object of the present invention provides a process for preparing the polymer alloy according to the object as above defined.

In a further object, the present invention is directed to articles made of said polymer alloy.

### Brief description of drawings

Figure 1 shows the SEM image of the blend of Example 2 at a magnification of 1000.0x and 5000x.
Figure 2 shows the SEM image of the blend of Example 3 at a magnification of 1050.0x and 5000x.
Figure 3 shows the SEM image of the blend of Example 5 at a magnification of 1000.0x and at a magnification of 7960.0x.
Figure 4 shows the SEM image of the blend of Example 6 at a magnification of 967.0x

### Description of embodiments

### Aromatic polymer (A)

Aromatic polymer (A) to be used in the present invention may be a poly(arylene sulfide) (PAS) or an aromatic sulfone polymer (SP). PASs are polymers comprising the repeating unit of the formula -(Ar-S)- as the main structural unit, preferably containing the repeating unit in an amount of 80 mol% or more. Ar represents an aromatic group, and examples include units (RU1) represented by the formulas (I) to (XI) given below, among which the formula (I) is particularly preferred: 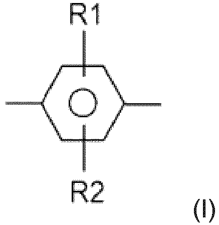 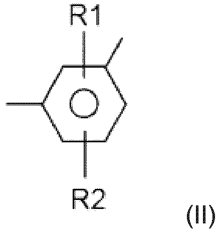 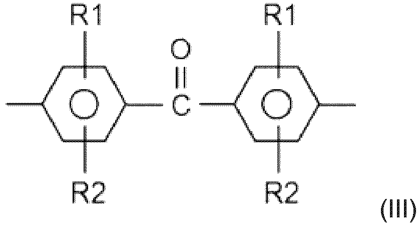 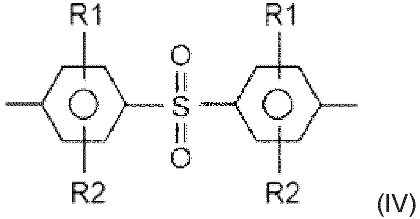 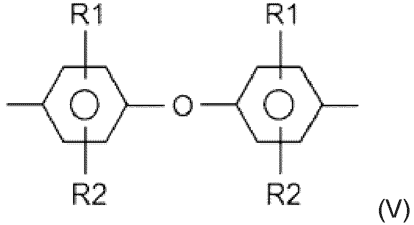 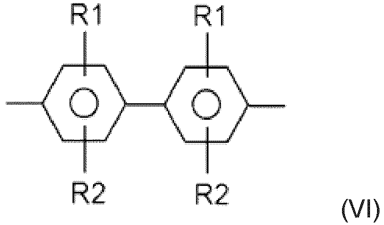 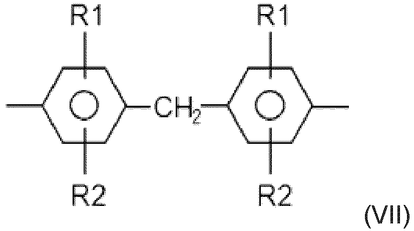 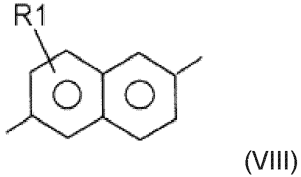 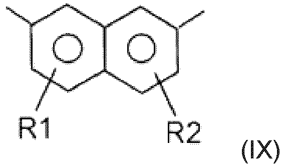 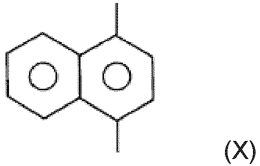 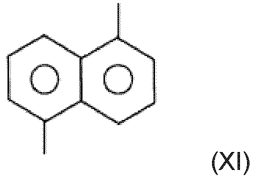 wherein R1 and R2 each represent a substituent selected from hydrogen, alkyl of 1 to 12 carbon atoms, alkoxy of 1 to 12 carbon atoms, arylene of 6 to 24 carbon atoms, and halogen, and R1 and R2 may be the same or different.

Accordingly, poly(arylene sulfide) (PAS) is preferably polyphenylene sulfide (PPS).

For the purposes of the present invention, the definition "aromatic sulfone polymer (SP)" is intended to denote any polymer of which more than 50 by weight %, preferably more than 70 by weight%, more preferably more than 90 by weight%, of recurring units (RU2) comprise at least one group of formula (XII): 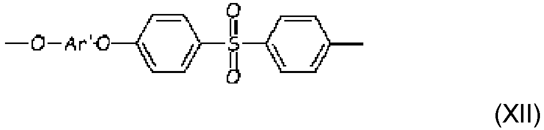 Ar' being a group chosen among the following structures: 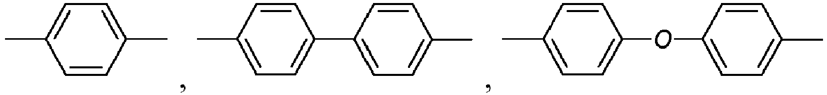 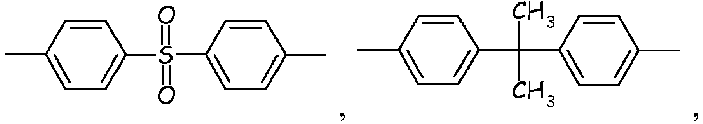 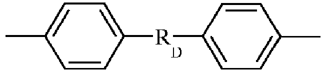 with R_{D} being : 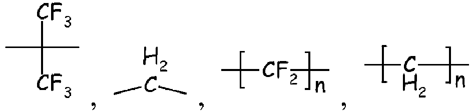 with n = integer from 1 to 6.

The recurring units (RU2) are preferably chosen from:

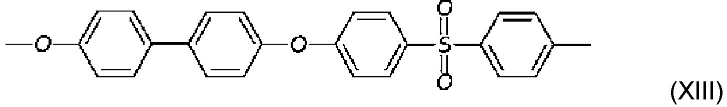

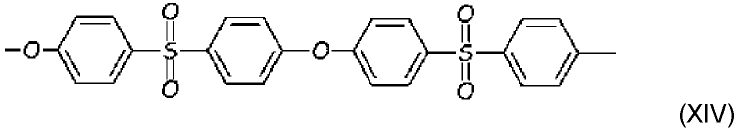

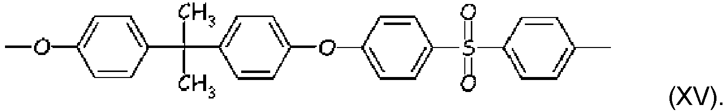

Accordingly, aromatic sulfone polymer (SP) is preferably chosen among the group consisting of polysulfone (PSU), polyphenylsulfone (PPSU), polyethersulfone (PESU), copolymers and mixtures thereof and is most preferably a polysulfone (PSU) or polyphenylsulfone (PPSU).

Polysulfone is notably available as UDEL^{®} PSU from Solvay Specialty Polymers USA, L.L.C.

UDEL^{®} polysulfone is made by condensing bisphenol A and 4,4'-dichlorodiphenyl sulfone.

Polyphenylsulfone is notably available as RADEL^{®} R from SOLVAY ADVANCED POLYMERS, L.L.C and is made by reacting units of 4,4'-dichlorodiphenyl sulfone and 4,4'-biphenol.

Methods well known in the art are for instance those described in documents US3634355; US4008203; US4108837 and US4175175.

The amount of aromatic polymer (A) in the polymer alloy is comprised between 50 and 90 parts by weight, preferably between 60 and 80 parts by weight, per 100 parts by weight of polymer alloy.

### Vulcanizate (C)

Vulcanizate (C) to be used in the present invention is a thermoplastic vulcanizate fluorine-containing composition comprising a continuous thermoplastic fluoropolymer phase and a dispersed vulcanized fluoroelastomer phase.

Polymer (F) is a thermoplastic, that is to say a polymer which softens on heating and hardens on cooling at room temperature, which at room temperature exists below its glass transition temperature if fully amorphous or below its melting point if semi-crystalline.

Polymer (F) is semi-crystalline, that is to say it has a definite melting point; preferred polymers (F) are those possessing a heat of fusion of at least 5 J/g, preferably of at least 10 J/g, more preferably at least 30 J/g. Without upper limit for heat of fusion being critical, it is nevertheless understood that polymer (F) will generally possess a heat of fusion of at most 55 J/g, preferably of at most 53 J/g, more preferably of at most 50 J/g.

Heat of fusion is generally determined by DSC according to ASTM D3418 standard.

Polymer (F) is fluorinated, that is to say it comprises recurring units derived from at least one fluorinated monomer [monomer (MF)].

Polymer (F) is a partially fluorinated fluoropolymer.

For the purpose of the present invention, the term "partially fluorinated fluoropolymer" is intended to denote a polymer comprising recurring units derived from at least one fluorinated monomer, wherein at least one of said fluorinated monomers comprise at least one hydrogen atom.

By the term "fluorinated monomer (MF)" it is hereby intended to denote an ethylenically unsaturated monomer comprising at least one fluorine atom.

The term "at least one fluorinated monomer (MF)" is understood to mean that the polymer (F) may comprise recurring units derived from one or more than one fluorinated monomers (MF).

The monomer (MF) is generally selected from the group consisting of:
(a) C₂-C₈ perfluoroolefins, such as tetrafluoroethylene, and hexafluoropropene;
(b) C₂-C₈ hydrogenated fluoroolefins, such as vinyl fluoride, 1,2-difluoroethylene, vinylidene fluoride and trifluoroethylene;
(c) perfluoroalkylethylenes complying with formula CH₂=CH-R_{f0}, in which R_{f0} is a C₁-C₆ perfluoroalkyl;
(d) chloro- and/or bromo- and/or iodo-C₂-C₆ fluoroolefins, like chlorotrifluoroethylene;
(e) (per)fluoroalkylvinylethers complying with formula CF₂=CFOR_{f1} in which R_{f1} is a C₁-C₆ fluoro- or perfluoroalkyl, e.g. CF₃, C₂F₅, C₃F₇ ;
(f) CF₂=CFOX₀ (per)fluoro-oxyalkylvinylethers, in which X₀ is a C₁-C₁₂ alkyl, or a C₁-C₁₂ oxyalkyl, or a C₁-C₁₂ (per)fluorooxyalkyl having one or more ether groups, like perfluoro-2-propoxy-propyl;
(g) (per)fluoroalkylvinylethers complying with formula CF₂=CFOCF₂OR_{f2} in which R_{f2} is a C₁-C₆ fluoro- or perfluoroalkyl, e.g. CF₃, C₂F₅, C₃F₇ or a C₁-C₆ (per)fluorooxyalkyl having one or more ether groups, like -C₂F₅-O-CF₃;
(h) functional (per)fluoro-oxyalkylvinylethers complying with formula CF₂=CFOY₀, in which Y₀ is a C₁-C₁₂ alkyl or (per)fluoroalkyl, or a C₁-C₁₂ oxyalkyl, or a C₁-C₁₂ (per)fluorooxyalkyl having one or more ether groups and Y₀ comprising a carboxylic or sulfonic acid group, in its acid, acid halide or salt form;
(i) fluorodioxoles, of formula (I): 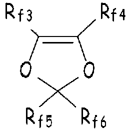 wherein each of R_{f3}, R_{f4}, R_{f5}, R_{f6}, equal or different each other, is independently a fluorine atom, a C₁-C₆ fluoro- or per(halo)fluoroalkyl, optionally comprising one or more oxygen atom, e.g. -CF₃, -C₂F₅, -C₃F₇, -OCF₃, -OCF₂CF₂OCF₃.

Polymer (F) is a partially fluorinated fluoropolymer comprising recurring units derived from vinylidene fluoride (VDF), and, optionally, recurring units derived from at least one fluorinated monomer different from VDF.

Polymer (F) more preferably comprises:
- at least 60% by moles, preferably at least 75% by moles, more preferably at least 85% by moles of recurring units derived from vinylidene fluoride (VDF),
- optionally, from 0.1% to 15% by moles, preferably from 0.1% to 12% by moles, more preferably from 0.1% to 10% by moles of recurring units derived from at least one fluorinated monomer different from VDF, all the aforementioned % by moles being referred to the total moles of recurring units of the polymer (F).

The said fluorinated monomer different from VDF is advantageously selected from vinyl fluoride (VF1), chlorotrifluoroethylene (CTFE), hexafluoropropylene (HFP), tetrafluoroethylene (TFE), trifluoroethylene (TrFE) and perfluoromethylvinylether (PMVE).

As non-limitative examples of polymers (F) useful in the present invention, mention can be notably made of homopolymers of VDF, VDF/TFE copolymers, VDF/CTFE copolymers.

VDF homopolymers are particularly advantageous for being used as polymer (F) in the vulcanizate (C).

The polymer (F) is typically obtainable by emulsion polymerization or suspension polymerization.

The melt index of the polymer (F) is advantageously at least 0.01, preferably at least 0.05, more preferably at least 0.1 g/10 min and advantageously less than 50, preferably less than 30, more preferably less than 20 g/10 min, when measured in accordance with ASTM test No. 1238, run at 230°C, under a piston load of 2.16 kg.

The melt index of the polymer (F) is advantageously at least 1, preferably at least 2, more preferably at least 5 g/10 min and advantageously less than 70, preferably less than 50, more preferably less than 40 g/10 min, when measured in accordance with ASTM test No. 1238, run at 230°C, under a piston load of 5 kg.

The polymer (F) has a melting point (Tₘ₂) of at least 120°C, preferably at least 125°C, more preferably at least
130°C and of at most 190°C, preferably at most 185°C, more preferably at most 180°C, when determined by DSC, at a heating rate of 10°C/min, according to ASTM D 3418.

For the purposes of this invention, the term "(per)fluoroelastomer [elastomer (E)]" is intended to designate a fluoropolymer resin serving as a base constituent for obtaining a true elastomer, said fluoropolymer resin comprising more than 10 % by weight, preferably more than 30 % by weight, of recurring units derived from at least one ethylenically unsaturated monomer comprising at least one fluorine atom (hereafter, (per)fluorinated monomer) and, optionally, recurring units derived from at least one ethylenically unsaturated monomer free from fluorine atom (hereafter, hydrogenated monomer).

True elastomers are defined by the ASTM, Special Technical Bulletin, No. 184 standard as materials capable of being stretched, at room temperature, to twice their intrinsic length and which, once they have been released after holding them under tension for 5 minutes, return to within 10 % of their initial length in the same time.

Non limitative examples of suitable (per)fluorinated monomers are notably:
- C₂-C₈ fluoro- and/or perfluoroolefins, such as tetrafluoroethylene (TFE), hexafluoropropene (HFP), pentafluoropropylene, and hexafluoroisobutylene;
- C₂-C₈ hydrogenated monofluoroolefins, such as vinyl fluoride, 1,2-difluoroethylene, vinylidene fluoride (VDF) and trifluoroethylene (TrFE);
- (per)fluoroalkylethylenes complying with formula CH₂=CH-R_{f0}, in which R_{f0} is a C₁-C₆ (per)fluoroalkyl or a C₁-C₆ (per)fluorooxyalkyl having one or more ether groups ;
- chloro- and/or bromo- and/or iodo-C₂-C₆ fluoroolefins, like chlorotrifluoroethylene (CTFE);
- fluoroalkylvinylethers complying with formula CF₂=CFOR_{f1} in which R_{f1} is a C₁-C₆ fluoro- or perfluoroalkyl, e.g. -CF₃, -C₂F₅, -C₃F₇ ;
- hydrofluoroalkylvinylethers complying with formula CH₂=CFOR_{f1} in which R_{f1} is a C₁-C₆ fluoro- or perfluoroalkyl, e.g. -CF₃, -C₂F₅, -C₃F₇ ;
- fluoro-oxyalkylvinylethers complying with formula CF₂=CFOX₀, in which X₀ is a C₁-C₁₂ oxyalkyl, or a C₁-C₁₂ (per)fluorooxyalkyl having one or more ether groups, like perfluoro-2-propoxy-propyl;
- fluoroalkyl-methoxy-vinylethers complying with formula CF₂=CFOCF₂OR_{f2} in which R_{f2} is a C₁-C₆ fluoro- or perfluoroalkyl, e.g. -CF₃, -C₂F₅, -C₃F₇ or a C₁-C₆ (per)fluorooxyalkyl having one or more ether groups, like -C₂F₅-O-CF₃;
- functional fluoro-alkylvinylethers complying with formula CF₂=CFOY₀, in which Y₀ is a C₁-C₁₂ alkyl or (per)fluoroalkyl, or a C₁-C₁₂ oxyalkyl or a C₁-C₁₂ (per)fluorooxyalkyl, said Y₀ group comprising a carboxylic or sulfonic acid group, in its acid, acid halide or salt form;
- fluorodioxoles, of formula : 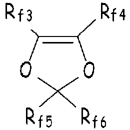 wherein each of R_{f3}, R_{f4}, R_{f5}, R_{f6}, equal or different each other, is independently a fluorine atom, a C₁-C₆ fluoro- or per(halo)fluoroalkyl, optionally comprising one or more oxygen atom, e.g. -CF₃, -C₂F₅, -C₃F₇, -OCF₃, -OCF₂CF₂OCF₃.

Examples of hydrogenated monomers are notably hydrogenated alpha-olefins, including ethylene, propylene, 1-butene, diene monomers, styrene monomers, alpha-olefins being typically used.

Elastomers (E) are amorphous products. In most cases, the (per)fluoroelastomer has advantageously a T_{g} below 10°C, preferably below 5°C, more preferably 0°C.

Elastomer (E) is preferably selected among:
(1) VDF-based copolymers, in which VDF is copolymerized with at least one comonomer selected from the group consisting of the followings classes, with the provision that such comonomer is different from VDF:
   (a1) C₂-C₈ perfluoroolefins, such as tetrafluoroethylene (TFE), hexafluoropropylene (HFP), hexafluoroisobutylene;
   (b1) hydrogen-containing C₂-C₈ olefins, such as C₂-C₈ non-fluorinated olefins (OI); C₂-C₈ partially fluorinated olefins, vinyl fluoride (VF), trifluoroethylene (TrFE), perfluoroalkyl ethylenes of formula CH₂ = CH-R_{f}, wherein R_{f} is a C₁-C₆ perfluoroalkyl group;
   (c1) C₂-C₈ chloro and/or bromo and/or iodo-fluoroolefins such as chlorotrifluoroethylene (CTFE);
   (d1) (per)fluoroalkylvinylethers of formula CF₂ = CFOR_{f}, wherein R_{f} is a C₁-C₆ (per)fluoroalkyl group; preferably perfluoroalkylvinylethers (PAVE) of above formula wherein R_{f} is C₁-C₆ perfluoroalkyl group, e.g. CF₃, C₂F₅, C₃F₇;
   (e1) (per)fluoro-oxy-alkylvinylethers of formula CF₂ = CFOX, wherein X is a C₁-C₁₂ ((per)fluoro)-oxyalkyl comprising catenary oxygen atoms, e.g. the perfluoro-2-propoxypropyl group;
   (f1) (per)fluorodioxoles having formula : 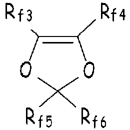 wherein R_{f3}, R_{f4}, R_{f5}, R_{f6}, equal or different from each other, are independently selected among fluorine atoms and C₁-C₆ (per)fluoroalkyl groups, optionally comprising one or more than one oxygen atom, such as notably -CF₃, -C₂F₅, -C₃F₇, -OCF₃, -OCF₂CF₂OCF₃; preferably, perfluorodioxoles;
   (g1) (per)fluoro-methoxy-vinylethers (MOVE, hereinafter) having formula: CFX² = CX²OCF₂OR"_{f}
   wherein R"_{f} is selected among C₁-C₆ (per)fluoroalkyls, linear or branched; C₅-C₆ cyclic (per)fluoroalkyls; and C₂-C₆ (per)fluorooxyalkyls, linear or branched, comprising from 1 to 3 catenary oxygen atoms, and X² = F, H; preferably X² is F and R"_{f} is -CF₂CF₃ (MOVE1); -CF₂CF₂OCF₃ (MOVE2); or -CF₃ (MOVE3);
   (h1) C₂-C₈ non-fluorinated olefins (OI), for example ethylene and propylene; and
(2) TFE-based copolymers, in which TFE is copolymerized with at least one comonomer selected from the group consisting of the classes (a1), (c1), (d1), (e1), (g1), (h1), and class (i2) below, with the provision that such comonomer is different from TFE:
   (i2) perfluorovinyl ethers containing cyanide groups, such as notably those described in patents US 4 281 092, US 5 447 993 and US 5 789 489.

Most preferred elastomers (E) are those having following compositions (in mol %):
(i) vinylidene fluoride (VDF) 35-85 %, hexafluoropropene (HFP) 10-45 %, tetrafluoroethylene (TFE) 0-30 %, perfluoroalkyl vinyl ethers (PAVE) 0-15 %;
(ii) vinylidene fluoride (VDF) 50-80 %, perfluoroalkyl vinyl ethers (PAVE) 5-50 %, tetrafluoroethylene (TFE) 0-20 %;
(iii) vinylidene fluoride (VDF) 20-30 %, C₂-C₈ non-fluorinated olefins (OI) 10-30 %, hexafluoropropene (HFP) and/or perfluoroalkyl vinyl ethers (PAVE) 18-27 %, tetrafluoroethylene (TFE) 10-30 %;
(iv) tetrafluoroethylene (TFE) 50-80 %, perfluoroalkyl vinyl ethers (PAVE) 20-50 %;
(v) tetrafluoroethylene (TFE) 45-65 %, C₂-C₈ non-fluorinated olefins (OI) 20-55 %, vinylidene fluoride 0-30 %;
(vi) tetrafluoroethylene (TFE) 32-60 % mol %, C₂-C₈ non-fluorinated olefins (OI) 10-40 %, perfluoroalkyl vinyl ethers (PAVE) 20-40 %, fluorovinyl ethers (MOVE) 0-30 %;
(vii) tetrafluoroethylene (TFE) 33-75 %, perfluoroalkyl vinyl ethers (PAVE) 15-45 %, vinylidene fluoride (VDF) 5-30 %, hexafluoropropene HFP 0-30 %;
(viii) vinylidene fluoride (VDF) 35-85 %, fluorovinyl ethers (MOVE) 5-40 %, perfluoroalkyl vinyl ethers (PAVE) 0-30 %, tetrafluoroethylene (TFE) 0-40 %, hexafluoropropene (HFP) 0-30 %;
(ix) tetrafluoroethylene (TFE) 20-70 %, fluorovinyl ethers (MOVE) 30-80 %, perfluoroalkyl vinyl ethers (PAVE) 0-50 %.

Optionally, elastomer (E) also comprises recurring units derived from a bis-olefin [bis-olefin (OF)] having general formula : 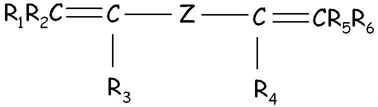 wherein R₁, R₂, R₃, R₄, R₅ and R₆, equal to or different from each other, are H, halogen, a group R_{Alk} or OR_{Alk}, wherein R_{Alk} is a branched or straight chain alkyl radical which can be partially, substantially or completely fluorinated or chlorinated; Z is a linear or branched C₁-C₁₈ alkylene or cycloalkylene radical, optionally containing oxygen atoms, preferably at least partially fluorinated, or a (per)fluoropolyoxyalkylene radical, e.g. as described in EP 661304 A (AUSIMONT SPA) 7/5/1995.

The bis-olefin (OF) is preferably selected from the group consisting of those complying with formulae (OF-1), (OF-2) and (OF-3) :
(OF-1) 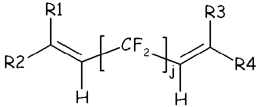 wherein j is an integer between 2 and 10, preferably between 4 and 8, and R1, R2, R3, R4, equal or different from each other, are H, F or C₁₋₅ alkyl or (per)fluoroalkyl group;
(OF-2) 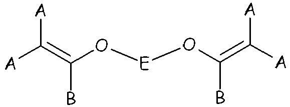 wherein each of A, equal or different from each other and at each occurrence, is independently selected from F, Cl, and H; each of B, equal or different from each other and at each occurrence, is independently selected from F, Cl, H and OR_{B}, wherein R_{B} is a branched or straight chain alkyl radical which can be partially, substantially or completely fluorinated or chlorinated; E is a divalent group having 2 to 10 carbon atom, optionally fluorinated, which may be inserted with ether linkages; preferably E is a -(CF₂)ₘ- group, with m being an integer from 3 to 5; a preferred bis-olefin of (OF-2) type is F₂C=CF-O-(CF₂)₅-O-CF=CF₂.
(OF-3) 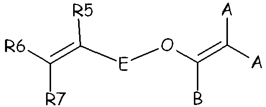 wherein E, A and B have the same meaning as above defined; R5, R6, R7, equal or different from each other, are H, F or C₁₋₅ alkyl or (per)fluoroalkyl group.

The weight ratio between polymer (F) and elastomer (E) is not particularly critical, provided that it is selected by routine experiments so as to deliver a continuous thermoplastic fluoropolymer phase and a dispersed vulcanized fluoroelastomer phase in the vulcanizate (C). Generally the weight ratio polymer (F)/elastomer (E) will be comprised between 10/90 wt/ wt to 70/30 wt/wt, preferably 20/80 to 40/60 wt/wt. The skilled in the art will select most appropriate weight ratio in view of target final properties of the vulcanizate (C).

In one embodiment of the invention, the vulcanizate (C) further comprises at least one plasticizer (P), preferably an organic ester plasticizer.

Preferred organic ester plasticizers are those characterized by a low volatility, wherein the term "low volatility" as used herein is intended to describe organic esters having a boiling point at atmospheric pressure of above 300°C.

In a preferred embodiment, the organic ester plasticizers are aliphatic di- or tri-esters.

Particularly suitable organic esters include esters of citric acid and esters of sebacic acid.

In a preferred embodiment of the present invention the vulcanizate (C) comprises:
- i) at least one thermoplastic fluoropolymer [polymer (F)];
- ii) at least one (per)fluoroelastomer [elastomer (E)]; and
- iii) at least one organic ester plasticizer [plasticizer (P)] selected from the group consisting of esters of citric acid and esters of sebacic acid.

In most preferred embodiments, the ester of citric acid is tributyl O-acetyl citrate and the ester of sebacic acid is dibutyl sebacate. Still more preferably, the plasticizer (P) is tributyl O-acetyl citrate.

The plasticizer (P) is present in the vulcanizate (C) in an amount of from 1 to 50 % by weight, preferably of from 4 to 30 % by weight, more preferably of from 5 to 20% by weight, based on the weight of polymer (F).

Still, the vulcanizate (C) may comprise additional optional ingredients, such as extender oils, synthetic processing oils, stabilizers, at least one processing aid, fillers, pigments, adhesives, tackifiers, and waxes. Such additional ingredients might be blended into the precursor mixture (M), or can be later compounded into the vulcanizate (C) after dynamic curing.

Vulcanizate (C) can be prepared by dynamic curing of a mixture (M), said mixture comprising:
- i) at least one thermoplastic fluoropolymer [polymer (F)], as above detailed;
- ii) at least one (per)fluoroelastomer [elastomer (E)], as above detailed,
- iii) optionally at least one organic ester plasticizer [plasticizer (P)] selected from organic esters, as above detailed; and
- iv) at least one curing system for the elastomer (E).

For obtaining the vulcanizate (C), the mixture (M) is submitted to dynamic curing.

**It** is thus understood that the vulcanizate (C) may thus additional comprise residues or decompositions products derived from said curing system.

The curing system can be effective for ionic curing, both based on polyhydroxylated or polyaminic compounds, peroxide curing and/or mixed curing of the elastomer (E).

The amount of the curing system is not particularly limited, provided that is present in an amount effective to ensure crosslinking of the elastomer (E) within the vulcanizate (C).

A curing system for peroxide curing generally comprises at least one peroxide (generally, an organic peroxide) that is capable of generating radicals by thermal decomposition, in an amount generally of between 0.1 and 10 and preferably between 0.5 and 5 weight parts per hundred parts of the elastomer (E). Among most commonly used agents, mention can be made of: dialkyl peroxides, for instance di-tert-butyl peroxide and 2,5-dimethyl-2,5-bis(tert-butylperoxy)hexane; dicumyl peroxide; dibenzoyl peroxide; di-tert-butyl perbenzoate; bis[1,3-dimethyl-3-(tert-butylperoxy)butyl] carbonate.

Further, in addition, the curing system for peroxide curing comprises:
(a) at least one curing co-agent, in an amount generally of between in an amount generally of between 0.5 and 10 and preferably between 1 and 7 weight parts per hundred parts of the elastomer (E); among these coagents, the following are commonly used: triallyl cyanurate; triallyl isocyanurate (TAIC); tris(diallylamine)-s-triazine; triallyl phosphite; N,N-diallylacrylamide; N,N,N',N'-tetraallylmalonamide; trivinyl isocyanurate; 2,4,6-trivinyl methyltrisiloxane; bis-olefins (OF), as above detailed; triazines, such as notably those described in European patent applications EP 860436 A (AUSIMONT SPA) 8/26/1998 and WO 97/05122 (DUPONT DE NEMOURS) 2/13/1997; among above mentioned curing co-agents, bis-olefins (OF), as above detailed, and more specifically those of formula (OF-1), as above detailed, have been found to provide particularly good results;
(b) optionally, a metallic compound, in an amounts of advantageously 1 to 15 and preferably 2 to 10 weight parts per hundred parts of the elastomer (E), selected from the group consisting of oxides and hydroxides of divalent metals, for instance Mg, Zn, Ca or Pb, optionally combined with a salt of a weak acid, for instance Ba, Na, K, Pb, Ca stearates, benzoates, carbonates, oxalates or phosphites;
(c) optionally, acid acceptors of the metal non-oxide type, such as 1,8-bis(dimethylamino)naphthalene, octadecylamine.

When the vulcanizate (C) is obtained by peroxide curing, elastomer (E) preferably contains iodine and/or bromine atoms in the chain and/or at the end of the macromolecules. The introduction of these iodine and/or bromine atoms may be obtained:
- by addition during elastomer (E) manufacture to the polymerization medium of brominated and/or iodinated cure-site comonomers, such as bromo and/or iodo olefins containing from 2 to 10 carbon atoms, or iodo and/or bromo fluoroalkyl vinyl ethers, in amounts such that the content of cure-site comonomers in the elastomer (E) is generally between 0.05 and 2 mol per 100 mol of the other base monomer units; or
- via addition during elastomer (E) manufacture of iodinated and/or brominated chain-transfer agent(s) to the polymerization medium, for instance compounds of formula R_{f}(I)ₓ(Br)_{y}, in which R_{f} is a (per)fluoroalkyl or a (per)fluorochloroalkyl containing from 1 to 8 carbon atoms, while x and y are integers between 0 and 2, with 1 ≤ x+y ≤ 2 or alkali metal or alkaline-earth metal iodides and/or bromides.

A curing system for ionic curing generally comprises at least one curing agent and at least one accelerator, as well known in the art.

The amount of accelerator(s) is generally comprised between 0.05 and 5 weight parts per hundred parts of elastomer (E) (phr) and that of the curing agent typically between 0.5 and 15 phr and preferably between 1 and 6 phr.

Aromatic or aliphatic polyhydroxylated compounds, or derivatives thereof, may be used as curing agents. Among these, mention will be made in particular of dihydroxy, trihydroxy and tetrahydroxy benzenes, naphthalenes or anthracenes; bisphenols, in which the two aromatic rings are linked together via an aliphatic, cycloaliphatic or aromatic divalent radical, or alternatively via an oxygen or sulphur atom, or else a carbonyl group. The aromatic rings may be substituted with one or more chlorine, fluorine or bromine atoms, or with carbonyl, alkyl or acyl groups. Bisphenol AF is particularly preferred.

Examples of accelerators that may be used include: quaternary ammonium or phosphonium salts; aminophosphonium salts; phosphoranes; the imine compounds. Quaternary phosphonium salts and aminophosphonium salts are preferred.

Instead of using the accelerator and the curing agent separately, it is also possible for the curing system for ionic curing to comprise an adduct between an accelerator and a curing agent in a mole ratio of from 1:2 to 1:5 and preferably from 1:3 to 1:5, the accelerator being one of the organic onium compounds having a positive charge, as defined above, and the curing agent being chosen from the compounds indicated above, in particular dihydroxy or polyhydroxy or dithiol or polythiol compounds; the adduct being obtained by melting the product of reaction between the accelerator and the curing agent in the indicated mole ratios, or by melting the mixture of the 1:1 adduct supplemented with the curing agent in the indicated amounts. Optionally, an excess of the accelerator, relative to that contained in the adduct, may also be present.

The following are particularly preferred as cations for the preparation of the adduct : 1,1-diphenyl-1-benzyl-N-diethylphosphoranamine and tetrabutylphosphonium; particularly preferred anions are bisphenol compounds in which the two aromatic rings are bonded via a divalent radical chosen from perfluoroalkyl groups of 3 to 7 carbon atoms, and the OH groups are in the para position.

Other ingredients optionally comprised in the curing system for ionic curing are:
I) one or more mineral acid acceptors, generally chosen from those known in the ionic curing of elastomers, preferably selected from the group consisting of oxides of divalent metals, preferably oxides of Mg, Zn, Ca or Pb, typically comprised in amounts of 1-40 phr of elastomer (A);
II) one or more basic compounds chosen from those known in the ionic curing of elastomers, commonly selected from the group consisting of hydroxides of divalent metals (preferably: Ca(OH)₂, Sr(OH)₂, Ba(OH)₂), metal salts of weak acids, for instance Ca, Sr, Ba, Na and K carbonates, benzoates, oxalates and phosphites and mixtures of the above mentioned hydroxides with the above mentioned metal salts, typically added in amounts of from 0.5 to 10 phr of elastomer (E).

The Applicant has surprisingly found that the vulcanizate (C) can be used for preparing polymer alloys comprising a sulphur-containing aromatic polymer and a vulcanizate (C) in all proportions by weight, wherein the components of the alloy are uniformly dispersed.

It has in fact been observed that after melt mixing a blend of vulcanizate (C) and sulphur-containing aromatic polymer at a temperature which is above the temperature where all the components are in the molten form, a plurality of discrete domains dispersed within a continuous phase is formed, wherein the dimension of the particle size of said discrete domains is markedly decreased in comparison with the blend before melt mixing.

It has in fact been observed that after melt mixing a blend of vulcanizate (C) and a sulphur-containing aromatic polymer at a temperature which is above the temperature where all the components are in the molten form a marked decrease in the dimension of the domains of the components occurs.

The average particle size of the discrete domains in the polymer alloy of the present invention is conveniently less than 2 microns, preferably less than 1 micron, more preferably less than 0.5 microns.

The average particle size of the components in the polymer alloy of the present invention can be measured by Scanning Electron Microscopy on the freeze fractured blend obtained after melt mixing the blend above the temperature where all the components are in the molten form, as the average over 100 particles obtained by analyzing pictures at 1000x magnification.

The present invention provides a polymer alloy comprising a continuous phase of a vulcanizate (C) and discrete domains of a sulphur-containing aromatic polymer [aromatic polymer (A)].

The present invention provides a polymer alloy (PA) which comprises:
- (a) from 10 to 40%, preferably from 15 to 25% by weight of aromatic polymer (A); and
- (b) from 60 to 90%, preferably from 75 to 85% by weight of vulcanizate (C),
all the aforementioned percentages by weight being referred to the total weight of polymer alloy (PA).

The Applicant has also surprisingly found that the addition of a copolymer (CO) comprising recurring units derived from vinylidene fluoride (VDF) and recurring units derived from chlorotrifluoroethylene (CTFE) can be used to further significantly improve the compatibilization of the components of the polymer alloy in all proportions by weight, thus allowing the preparation of polymer alloys comprising the components uniformly dispersed therein.

Mixing a vulcanizate (C) and a sulphur-containing aromatic polymer in the presence of certain amounts of a copolymer (CO) at a temperature which is above the temperature where all the components are in the molten form results in fact in a uniformly dispersed alloy wherein dispersed domains of reduced average particle size are dispersed within a continuous phase.

Without wishing to be bound to any theory, it is believed that melt mixing a sulphur-containing aromatic polymer with a copolymer (CO) gives a chemically linked fluorinated-aromatic moiety which acts as an in-situ-generated compatibilizer.

### Copolymer (CO)

Copolymer (CO) preferably comprises recurring units derived:
- from VDF in an amount from 50 to 90% by moles with respect to the total moles of recurring units of copolymer (CO); and
- from CTFE in an amount 5 to 20 % by moles of CTFE with respect to the total moles of recurring units of copolymer (CO).

Recurring units of at least another fluorinated monomer (MF) as above defined, different from vinylidene fluoride and from chlorotrifluoroethylene may be included in copolymer (CO).

The fluorinated monomer (MF) optionally present in copolymer (CO) is preferably hexafluoropropylene (HFP).

The amount of fluorinated monomer (MF) in copolymer (CO) is preferably of at least 2.5 % by moles, preferably at least 4.0 % by moles, even more preferably at least 6.0 % by moles with respect to the total moles of recurring units of copolymer (CO).

Melt flow rate of the copolymers (CO), measured following the procedure of ASTM D1238, ranges generally from 1 to 50 g/10 min.

In a preferred embodiment, copolymer (CO) comprises, or preferably consists of, recurring units derived:
- from 50 to 90% by moles of VDF;
- from 5 to 20 % by moles of CTFE;
- from 10 to 30% by moles of a fluorinated monomer (MF), different from vinylidene fluoride and from chlorotrifluoroethylene,
all the aforementioned percentages by moles being referred to the total moles of recurring units of copolymer (CO).
According to an aspect of the present invention, it is thus provided a polymer alloy (PA) as defined in claim 1 comprising :
- c) a copolymer [copolymer (CO)] comprising recurring units derived from vinylidene fluoride (VDF) and recurring units derived from chlorotrifluoroethylene (CTFE).

The copolymer (CO) in the polymer alloy can be present in an amount comprised between 0.1 to 20% by weight, preferably from 1 to 10% by weight, more preferably from 2 to 5% by weight, with respect to the total weight of the polymer alloy (PA).

In an aspect, the present invention provides a polymer alloy comprising a co-continuous phase of a vulcanizate (C) and of a copolymer (CO) and discrete domains of an aromatic polymer (A).

In a preferred embodiment according to this aspect, the polymer alloy (PA) comprises:
- (a) from 10 to 40%, preferably from 15 to 25% by weight of aromatic polymer (A);
- (b) from 59 to 89%, preferably from 75 to 85% by weight of a vulcanizate (C);
- (c) from 0.1 to 20% by weigh, preferably from 1 to 10% by weight, more preferably from 2 to 5% by weight, of a copolymer (CO),
all the aforementioned percentages by weight being referred to the total weight of polymer alloy (PA).

To further improve the mechanical properties of the polymer alloy, various additives like fillers and plasticizers, such as organic esters, may be added to the polymer alloy of the present invention. Examples of the fillers are glass fibers, asbestos fibers, silica fibers, silica-alumina fibers, alumina fibers, zirconia fibers, potassium titanate whiskers, polyamide fibers, polyphenol fibers, silica, talc, clay, mica, calcium carbonate, barium sulfate, titanium oxide, silicon nitride.

In a further object, the present invention provides a process for preparing the polymer alloy (PA) as above defined, said process comprising melt mixing the components of the polymer alloy.

Melt mixing is carried out at a temperature where all the components are in the molten form, thus at a temperature above the glass transition temperature or above the melting temperature of all the components.

In the melt mixing procedure, the aromatic polymer (A) and the vulcanizate (C) and, optionally, the copolymer (CO), can be melted together, brought separately to their respective melting temperature and then mixed with each other, or subsequently added to a first melted polymer.

In a preferred embodiment according to the first object defined above, the melt mixing procedure is carried out by adding the vulcanizate (C) to the aromatic polymer (A) in the molten form.

The melt mixing procedure is carried out by adding the vulcanizate (C) and the copolymer (CO) to the aromatic polymer (A) in the molten form, mixing for few minutes.

The blend thus formed is allowed to stir for some minutes and allowed to cool to room temperature to provide the polymer alloy of the invention.

The polymer alloy of the present invention is preferably in the form of pellets.

The polymer alloy of the present invention has improved mechanical properties, in particular tensile properties, while maintaining the excellent properties of the parent polymers. Therefore, the polymer alloy of the present invention is suitably used in various fields including Automotive, Oil and Gas and Chemical Process Industry.

In a further object, therefore, the present invention provides an article comprising the polymer alloy as defined above. Preferably, the article according to the present invention can be a pipe or a piece of equipment formed by extrusion or molding technologies. Preferably, injection molding is used to obtain the wanted piece of equipment. Additionally, the articles of the present invention can be adhered to other articles by coextrusion or overmolding technologies.

The invention will be now described with reference to the following examples, whose purpose is merely illustrative and not intended to limit the scope of the invention.

### EXPERIMENTAL PART

### RAW MATERIALS

PPS: Polyphenylene sulfide, commercially available as Ryton^{®} from Solvay.
POLYMER F = VDF homopolymer, commercially available as Solef^{®} 6008 from Solvay.
ELASTOMER contains 100 parts by weight of a vinylidene fluoride/hexafluoropropylene /tetrafluorethylene terpolymer having 68.5 % fluorine content, 2.5 parts by weight of Bisphenol AF (CAS-No 1478-61-1), 0.5 part of Benzyl(diethylamino) diphenylphosphonium chloride (CAS-No 82857-68-9) and 0.4 parts by weight of benzyltriphenylphosphonium chloride (CAS-No. : 1100-88-5). VDF-co-CTFE: VDF copolymer comprising 9% by moles of CTFE recurring units.

### Measurement of particle size

The average particles size the components of the polymer alloy is measured by SEM as the average over 100 particles obtained by analyzing pictures at about 1000x magnification.

### Tensile measurement (elongation at break)

Tensile measurements were carried out at 23 °C according to ASTM D638 specimen type V.

### Measurement of shear storage modulus (G')

The shear storage modulus (G') at 200 °C was measured according to ASTM D5279-13 (torsion bar geometry) for the PPS-containing alloys. For the TPV, it was measured according to ASTM D4440-15, (parallel plate geometry).

All the measurements were performed at a frequency of 6.28 rad/sec.

### Example 1

A Thermoplastic vulcanizate (TPV) was prepared in two steps using a Brabender internal mixer EHT 50.

The first step consisted in the preparation of an elastomer masterbatch by adding 6 phr of calcium hydroxide and 3 phr of magnesium oxide to ELASTOMER. The elastomer masterbatch was prepared using elastomer blades, cooling the mixer to keep the temperature always below 70°C. The mixing time was twenty minutes.

In the second step, the internal mixer temperature was set at 200 °C. About 18 grams of POLYMER F were poured into the mixer and melted for 5 minutes at 30 rpm. Then about 42 grams of the elastomer masterbatch prepared in the first step, cut in small pieces of 10-15 mm, were added. The mixing was continued for 20 more minutes, recording the torque and the temperature.

Finally, the TPV thus obtained was manually removed from the mixer and grinded in liquid nitrogen.

### Example 2 (not of the invention)

A blend of PPS and the TPV prepared according to example 1 was prepared in an internal mixer at 310 °C using roller blades. About 53 grams of PPS were poured into the mixer and melted for 15 minutes at 30 rpm. Then, 18 gram of TPV were added and mixed at 70 rpm for 15 min. Finally, the mixture was manually removed from the mixer and grinded in liquid nitrogen.

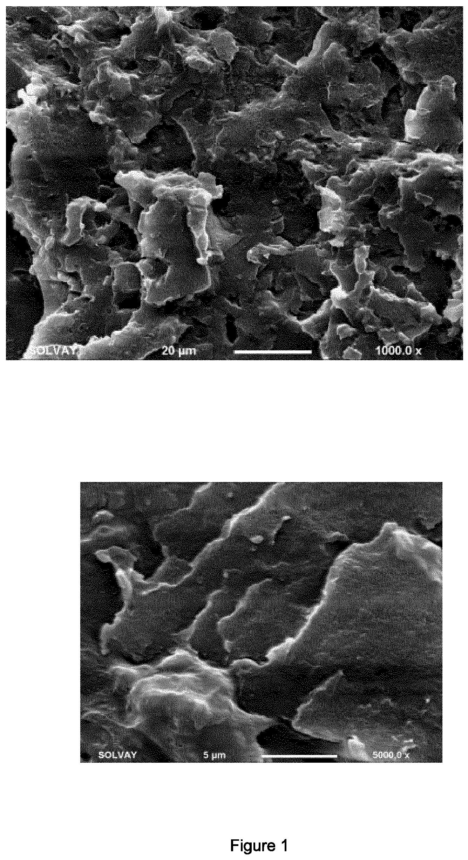

The SEM image of the blend obtained in Example 2 is shown in Figure 1.

### Example 3 (not of the invention)

A blend of PPS, the TPV prepared according to example 1 and VDF-co-CTFE was prepared in an internal mixer at 310 °C using roller blades. About 51 grams of PPS were poured into the mixer and melted for 15 minutes at 30 rpm. Then, a powder mixture containing 17 gram of TPV and 2 grams of VDF-co-CTFE was added into the mixer and mixed at 70 rpm for 15 min. Finally, the mixture was manually removed from the mixer and grinded in liquid nitrogen.

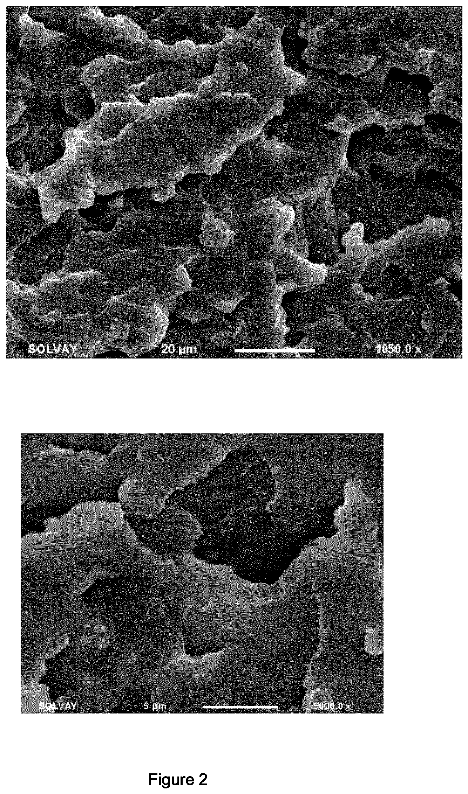

The SEM image of the blend obtained in Example 3 is shown in Figure 2.

### Example 4 (not of the invention)

A blend of PPS and the TPV prepared according to example 1 was prepared in an internal mixer at 310 °C using roller blades. About 35.5 grams of PPS were poured into the mixer and melted for 15 minutes at 30 rpm. Then, 35.5 grams of TPV were added and mixed at 70 rpm for 15 min. Finally, the mixture was manually removed from the mixer and grinded in liquid nitrogen.

### Example 5

A blend of PPS and the TPV prepared according to example 1 was prepared in an internal mixer at 310 °C using roller blades. About 18 grams of PPS were poured into the mixer and melted for 15 minutes at 30 rpm. Then, 53 gram of TPV were added and mixed at 70 rpm for 15 min. Finally, the mixture was manually removed from the mixer and grinded in liquid nitrogen.

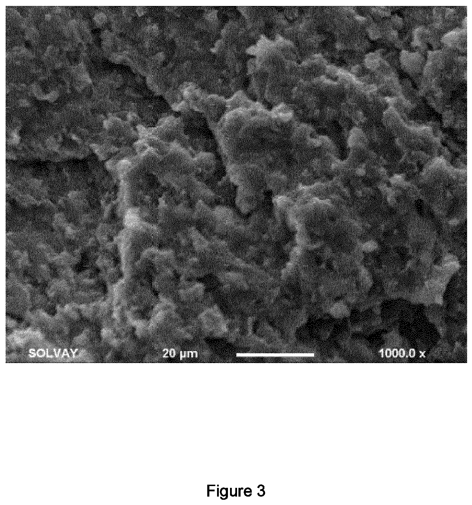

The SEM image of the blend obtained in Example 5 is shown in Figure 3.

### Example 6

A blend of PPS, the TPV prepared according to example 1 and VDF-co-CTFE was prepared in an internal mixer at 310 °C using roller blades. About 17 grams of PPS were poured into the mixer and melted for 15 minutes at 30 rpm. Then, a powder mixture containing 51 gram of TPV and 2 grams of VDF-co-CTFE were added and mixed at 70 rpm for 15 min. Finally, the mixture was manually removed from the mixer and grinded in liquid nitrogen.

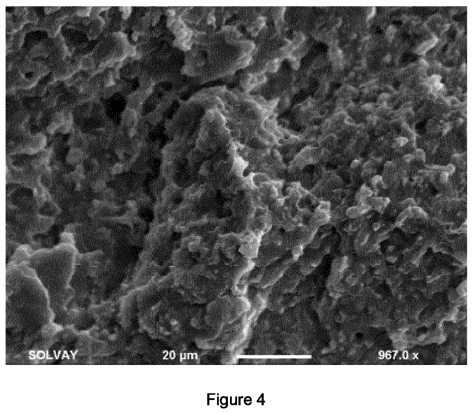

The SEM image of the blend obtained in Example 6 is shown in Figure 4.

| **Example** | **PPS** | **TPV** | **VDF-co-CTFE** | **Average Particle size** | **Elongation at break at 23 °C** | **Storage modulus at 200 °C** |
|---|---|---|---|---|---|---|
| | *parts* | *parts* | *parts* | *(µm)* | % | *MPa* |
| 1 | 0 | 100 | - | - | 250 | 0.2 |
| 2 | 75 | 25 | - | < 0.2 | 16 | 95 |
| 3 | 75 | 25 | 3 | < 0.2 | 20 | - |
| 4 | 50 | 50 | - | - | 50 | 45 |
| 5 | 25 | 75 | - | n.d. | 90 | 11 |
| 6 | 25 | 75 | 3 | n.d | 120 | - |

| | | | | | | |
|---|---|---|---|---|---|---|
| n.d. = non detectable | | | | | | |

The polymer alloys of examples 5-6, prepared according to the present invention, show a very low average particle size of the TPV and of the VDF-co-CTFE copolymer in the aromatic polymer (A). This result demonstrates the high dispersibility of TPV, and of VDF-co-CTFE copolymer, and the effect of copolymer in further improving the compatibilization of TPV with sulphur-containing aromatic polymers.

The polymer alloys of examples 2, 4 and 5 show a high shear storage modulus at 200°C, which demonstrate that alloy 5 according to the present invention has a mechanical strength at a temperature that is above the melting point of VDF homopolymer (polymer F).

Conversely, pure TPV comprising VDF homopolymer has the typical modulus of highly viscous materials in the range of 10⁵ Pa; this is due to the fact that the VDF homopolymer at 200°C is fully melted.

### Example 7 Adhesion test

This example is to measure the adhesion between PPS and the polymer alloy prepared according to Example 6 (BLEND, hereinafter). A 80 x 130 x 1 mm3 plaque of the BLEND and a 80 x 130 x 3 mm plaque of PPS were separately prepared by compression molding at 310 °C.

Then, the two slabs were made adhered in a 80 x130 x 4 mm³ mold by applying a slight pressure for 5 minutes at 310 °C, putting a thin PTFE tape on one side to have a non-adhered portion of the two slabs and facilitate the separation of the two slabs for adhesion measurement. After cooling at room temperature, three 12.5 mm wide strips were milled from the adhered slabs. The rigid PPS half was blocked in a 90°-peel jig while the free side of the more flexible BLEND plaque was attached to the grip of the Universal Testing Machine and drawn at 1mm/min. All the three strips broke by cohesive failure of the BLEND at a force about 120±10 N. Therefore the adhesion force between PPS and the BLEND is higher than 9.5 N/mm.

## Claims

1. A polymer alloy (PA) which comprises:
- (a) from 10 to 40%, preferably from 15 to 25% by weight of a sulphur-containing aromatic polymer [aromatic polymer (A)]; and
- (b) from 60 to 90%, preferably from 75 to 85% by weight of a thermoplastic vulcanizate fluorine-containing composition [vulcanizate (C)] comprising a continuous thermoplastic fluoropolymer phase and a dispersed vulcanized fluoroelastomer phase, said composition comprising:
- i) at least one semi-crystalline thermoplastic fluoropolymer [polymer (F)] which is a partially fluorinated fluoropolymer comprising recurring units derived from vinylidene fluoride (VDF) and, optionally, recurring units derived from at least one fluorinated monomer different from VDF, said polymer (F) having a melting point (Tm₂) of at least 120°C and of at most 190°C, when determined by DSC, at a heating rate of 10 °C/min according to ASTM D 3418; and
- ii) at least one (per)fluoroelastomer [elastomer (E)] which is amorphous , all the aforementioned percentages by weight being referred to the total weight of polymer alloy (PA).

2. The polymer alloy (PA) according to claim 1 wherein the aromatic polymer (A) is a poly(arylene sulfide (PAS), preferably polyphenylene sulfide (PPS), or an aromatic sulfone polymer (SP), preferably polysulfone (PSU) or polyphenylsulfone (PPSU).

3. The polymer alloy (PA) according to any of the claims 1 or 2 wherein polymer (F) comprises recurring units derived from at least one fluorinated monomer [monomer (MF)] selected from the group consisting of:
(a) C₂-C₈ perfluoroolefins, such as tetrafluoroethylene, and hexafluoropropene;
(b) C₂-C₈ hydrogenated fluoroolefins, such as vinyl fluoride, 1,2-difluoroethylene, and trifluoroethylene;
(c) perfluoroalkylethylenes complying with formula CH₂=CH-R_{f0}, in which R_{f0} is a C₁-C₆ perfluoroalkyl;
(d) chloro- and/or bromo- and/or iodo-C₂-C₆ fluoroolefins, like chlorotrifluoroethylene;
(e) (per)fluoroalkylvinylethers complying with formula CF₂=CFOR_{f1} in which R_{f1} is a C₁-C₆ fluoro- or perfluoroalkyl, e.g. CF₃, C₂F₅, C₃F₇;
(f) CF₂=CFOX₀ (per)fluoro-oxyalkylvinylethers, in which X₀ is a C₁-C₁₂ alkyl, or a C₁-C₁₂ oxyalkyl, or a C₁-C₁₂ (per)fluorooxyalkyl having one or more ether groups, like perfluoro-2-propoxy-propyl;
(g) (per)fluoroalkylvinylethers complying with formula CF₂=CFOCF₂OR_{f2} in which R_{f2} is a C₁-C₆ fluoro- or perfluoroalkyl, e.g. CF₃, C₂F₅, C₃F₇ or a C₁-C₆ (per)fluorooxyalkyl having one or more ether groups, like -C₂F₅-O-CF₃;
(h) functional (per)fluoro-oxyalkylvinylethers complying with formula CF₂=CFOY₀, in which Y₀ is a C₁-C₁₂ alkyl or (per)fluoroalkyl, or a C₁-C₁₂ oxyalkyl, or a C₁-C₁₂ (per)fluorooxyalkyl having one or more ether groups and Y₀ comprising a carboxylic or sulfonic acid group, in its acid, acid halide or salt form;
(i) fluorodioxoles, of formula (I): 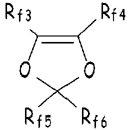 wherein each of R_{f3}, R_{f4}, R_{f5}, R_{f6}, equal or different each other, is independently a fluorine atom, a C₁-C₆ fluoro- or per(halo)fluoroalkyl, optionally comprising one or more oxygen atom, e.g. -CF₃, -C₂F₅, -C₃F₇, -OCF₃, -OCF₂CF₂OCF₃.

4. The polymer alloy (PA) according to according to any of the preceding claims wherein polymer (F) comprises:
- at least 60% by moles, preferably at least 75% by moles, more preferably at least 85% by moles of recurring units derived from vinylidene fluoride (VDF),
- optionally, from 0.1% to 15% by moles, preferably from 0.1% to 12% by moles, more preferably from 0.1% to 10% by moles of recurring units derived from at least one fluorinated monomer different from VDF, said fluorinated monomer being selected from the group consisting of vinyl fluoride (VF1), chlorotrifluoroethylene (CTFE), hexafluoropropylene (HFP), tetrafluoroethylene (TFE), trifluoroethylene (TrFE) and perfluoromethylvinylether (PMVE), all the aforementioned % by moles being referred to the total moles of recurring units of the polymer (F).

5. The polymer alloy (PA) according to claim 3 wherein elastomer (E) comprises:
(1) VDF-based copolymers, in which VDF is copolymerized with at least one comonomer selected from the group consisting of the followings classes, with the provision that such comonomer is different from VDF:
(a1) C₂-C₈ perfluoroolefins, such as tetrafluoroethylene (TFE), hexafluoropropylene (HFP), hexafluoroisobutylene;
(b1) hydrogen-containing C₂-C₈ olefins, such as C₂-C₈ non-fluorinated olefins (OI); C₂-C₈ partially fluorinated olefins, vinyl fluoride (VF), trifluoroethylene (TrFE), perfluoroalkyl ethylenes of formula CH₂ = CH-R_{f}, wherein R_{f} is a C₁-C₆ perfluoroalkyl group;
(c1) C₂-C₈ chloro and/or bromo and/or iodo-fluoroolefins such as chlorotrifluoroethylene (CTFE);
(d1) (per)fluoroalkylvinylethers of formula CF₂ = CFOR_{f}, wherein R_{f} is a C₁-C₆ (per)fluoroalkyl group; preferably perfluoroalkylvinylethers (PAVE) of above formula wherein R_{f} is C₁-C₆ perfluoroalkyl group, e.g. CF₃, C₂F₅, C₃F₇;
(e1) (per)fluoro-oxy-alkylvinylethers of formula CF₂ = CFOX, wherein X is a C₁-C₁₂ ((per)fluoro)-oxyalkyl comprising catenary oxygen atoms, e.g. the perfluoro-2-propoxypropyl group;
(f1) (per)fluorodioxoles having formula : 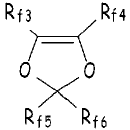 wherein R_{f3}, R_{f4}, R_{f5}, R_{f6}, equal or different from each other, are independently selected among fluorine atoms and C₁-C₆ (per)fluoroalkyl groups, optionally comprising one or more than one oxygen atom, such as notably -CF₃, -C₂F₅, -C₃F₇, -OCF₃, -OCF₂CF₂OCF₃; preferably, perfluorodioxoles;
(g1) (per)fluoro-methoxy-vinylethers (MOVE, hereinafter) having formula: CFX² = CX²OCF₂OR"_{f}
wherein R"_{f} is selected among C₁-C₆ (per)fluoroalkyls, linear or branched; C₅-C₆ cyclic (per)fluoroalkyls; and C₂-C₆ (per)fluorooxyalkyls, linear or branched, comprising from 1 to 3 catenary oxygen atoms, and X² = F, H; preferably X² is F and R"_{f} is -CF₂CF₃ (MOVE1); -CF₂CF₂OCF₃ (MOVE2); or -CF₃ (MOVE3);
(h1) C₂-C₈ non-fluorinated olefins (OI), for example ethylene and propylene; and
(2)TFE-based copolymers, in which TFE is copolymerized with at least one comonomer selected from the group consisting of the classes (a1), (c1), (d1), (e1), (g1), (h1), and class (i2) below, with the provision that such comonomer is different from TFE;
(i2) perfluorovinyl ethers containing cyanide groups.

6. The polymer alloy (PA) according to anyone of the preceding claims having a shear storage modulus measured according to ASTM D5279-13 at 200 °C higher than 1 MPa.

7. A process for preparing the polymer alloy (PA) according to any of claims 1 to 6 , said process comprising melt mixing the aromatic polymer (A), and the vulcanizate (C).

8. An article comprising the polymer alloy according to any of claims 1 to 6.

## Patentansprüche

1. Eine Polymerlegierung (PA), die umfasst:
- (a) 10 bis 40 Gew.-%, vorzugsweise 15 bis 25 Gew.-%, eines schwefelhaltigen aromatischen Polymers [aromatisches Polymer (A)]; und
- (b) 60 bis 90 Gew.-%, vorzugsweise 75 bis 85 Gew.-%, einer fluorhaltigen thermoplastischen Vulkanisatzusammensetzung [Vulkanisat (C)], umfassend eine kontinuierliche thermoplastische Fluorpolymerphase und eine dispergierte vulkanisierte Fluorelastomerphase, wobei die Zusammensetzung umfasst:
- i) mindestens ein teilkristallines thermoplastisches Fluorpolymer [Polymer (F)], das ein teilweise fluoriertes Fluorpolymer ist, umfassend von Vinylidenfluorid (VDF) abgeleitete Wiederholungseinheiten und gegebenenfalls von mindestens einem von VDF verschiedenen fluorierten Monomer abgeleitete Wiederholungseinheiten, wobei das Polymer (F) einen Schmelzpunkt (Tₘ₂) von mindestens 120°C und höchstens 190°C aufweist, wenn mittels DSC bei einer Heizrate von 10 °C/min gemäß ASTM D 3418 bestimmt; und
- ii) mindestens ein (Per)fluorelastomer [Elastomer (E)], das amorph ist,
wobei sich alle vorgenannten Gewichtsprozentsätze auf das Gesamtgewicht der Polymerlegierung (PA) beziehen.

2. Die Polymerlegierung (PA) nach Anspruch 1, wobei das aromatische Polymer (A) ein Poly(arylensulfid) (PAS), vorzugsweise Polyphenylensulfid (PPS), oder ein aromatisches Sulfonpolymer (SP), vorzugsweise Polysulfon (PSU) oder Polyphenylsulfon (PPSU), ist.

3. Die Polymerlegierung (PA) nach einem der Ansprüche 1 oder 2, wobei das Polymer (F) Wiederholungseinheiten umfasst, die von mindestens einem fluorierten Monomer [Monomer (MF)] abgeleitet sind, ausgewählt aus der Gruppe bestehend aus:
(a) C₂-C₈-Perfluorolefinen, wie Tetrafluorethylen und Hexafluorpropen;
(b) hydrierten C₂-C₈-Fluorolefinen, wie Vinylfluorid, 1,2-Difluorethylen und Trifluorethylen;
(c) Perfluoralkylethylenen gemäß der Formel CH₂=CH-R_{f0}, wobei R_{f0} ein C₁-C₆-Perfluoralkyl ist;
(d) Chlor- und/oder Brom- und/oder Iod-C₂-C₆-Fluorolefinen, wie Chlortrifluorethylen;
(e) (Per)fluoralkylvinylethern gemäß der Formel CF₂=CFOR_{f1}, wobei R_{f1} ein C₁-C₆-Fluor- oder Perfluoralkyl, z. B. CF₃, C₂F₅, C₃F₇, ist;
(f) CF₂=CFOX₀-(Per)fluoroxyalkylvinylethern, wobei X₀ ein C₁-C₁₂-Alkyl oder ein C₁-C₁₂-Oxyalkyl oder ein C₁-C₁₂-(Per)fluoroxyalkyl mit einer oder mehreren Ethergruppen, wie Perfluor-2-propoxy-propyl, ist;
(g) (Per)fluoralkylvinylethern gemäß der Formel CF₂=CFOCF₂OR_{f2}, wobei R_{f2} ein C₁-C₆-Fluor- oder Perfluoralkyl, z. B. CF₃, C₂F₅, C₃F₇, oder ein C₁-C₆-(Per)fluoroxyalkyl mit einer oder mehreren Ethergruppen, wie -C₂F₅-O-CF₃, ist;
(h) funktionellen (Per)fluoroxyalkylvinylethern gemäß der Formel CF₂=CFOY₀, wobei Y₀ ein C₁-C₁₂-Alkyl oder (Per)fluoralkyl oder ein C₁-C₁₂-Oxyalkyl oder ein C₁-C₁₂-(Per)fluoroxyalkyl mit einer oder mehreren Ethergruppen ist und Y₀ eine Carbonsäure- oder Sulfonsäuregruppe in ihrer Säure-, Säurehalogenid- oder Salzform umfasst;
(i) Fluordioxolen der Formel (I): 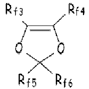 wobei jedes von R_{f3}, R_{f4}, R_{f5}, R_{f6}, gleich oder verschieden voneinander, unabhängig ein Fluoratom, ein C₁-C₆-Fluor- oder Per(halogen)fluoralkyl ist, das gegebenenfalls ein oder mehrere Sauerstoffatome umfasst, z. B. -CF₃, -C₂F₅, -C₃F₇, -OCF₃, -OCF₂CF₂OCF₃.

4. Die Polymerlegierung (PA) nach nach einem der vorhergehenden Ansprüche, wobei das Polymer (F) umfasst:
- mindestens 60 Mol-%, vorzugsweise mindestens 75 Mol-%, besonders bevorzugt mindestens 85 Mol-%, Wiederholungseinheiten, die von Vinylidenfluorid (VDF) abgeleitet sind,
- gegebenenfalls 0,1 bis 15 Mol-%, vorzugsweise 0,1 bis 12 Mol-%, besonders bevorzugt 0,1 bis 10 Mol-%, Wiederholungseinheiten, die von mindestens einem von VDF verschiedenen fluorierten Monomer abgeleitet sind, wobei das fluorierte Monomer ausgewählt ist aus der Gruppe bestehend aus Vinylfluorid (VF1), Chlortrifluorethylen (CTFE), Hexafluorpropylen (HFP), Tetrafluorethylen (TFE), Trifluorethylen (TrFE) und Perfluormethylvinylether (PMVE),
wobei sich alle vorgenannten Mol-% auf die Gesamtmolzahl der Wiederholungseinheiten des Polymers (F) beziehen.

5. Die Polymerlegierung (PA) nach Anspruch 3, wobei das Elastomer (E) umfasst:
(1) VDF-basierte Copolymere, in denen VDF mit mindestens einem Comonomer copolymerisiert ist, das aus der Gruppe ausgewählt ist, die aus den folgenden Klassen besteht, mit der Maßgabe, dass ein solches Comonomer von VDF verschieden ist:
(a1) C₂-C₈-Perfluorolefine, wie Tetrafluorethylen (TFE), Hexafluorpropylen (HFP), Hexafluorisobutylen;
(b1) wasserstoffhaltige C₂-C₈-Olefine, wie nicht fluorierte C₂-C₈-Olefine (OI); teilweise fluorierte C₂-C₈-Olefine, Vinylfluorid (VF), Trifluorethylen (TrFE), Perfluoralkylethylene der Formel CH₂ = CH-R_{f}, wobei R_{f} eine C₁-C₆-Perfluoralkylgruppe ist;
(c1) C₂-C₈-Chlor- und/oder Brom- und/oder Iod-Fluorolefine, wie Chlortrifluorethylen (CTFE);
(d1) (Per)fluoralkylvinylether der Formel CF₂ = CFOR_{f}, wobei R_{f} eine C₁-C₆-(Per)fluoralkylgruppe ist;
vorzugsweise Perfluoralkylvinylether (PAVE) der obigen Formel, wobei R_{f} eine C₁-C₆-Perfluoralkylgruppe ist, z. B. CF₃, C₂F₅, C₃F₇;
(e1) (Per)fluoroxyalkylvinylether der Formel CF₂ = CFOX, wobei X ein C₁-C₁₂-(Per)fluoroxyalkyl ist, das kettenständige Sauerstoffatome umfasst, z. B. die Perfluor-2-propoxypropylgruppe;
(f1) (Per)fluordioxole mit der Formel: 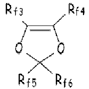 wobei R_{f3}, R_{f4}, R_{f5}, R_{f6}, gleich oder verschieden voneinander, unabhängig ausgewählt sind aus Fluoratomen und C₁-C₆-(Per)fluoralkylgruppen, die gegebenenfalls ein oder mehr als ein Sauerstoffatom umfassen, wie insbesondere -CF₃, -C₂F₅, -C₃F₇, -OCF₃, -OCF₂CF₂OCF₃; vorzugsweise Perfluordioxole;
(g1) (Per)fluor-methoxy-vinylether (nachstehend MOVE) mit der Formel:
CFX² = CX²OCF₂OR''f
wobei R"f ausgewählt ist aus linearen oder verzweigten C₁-C₆-(Per)fluoralkylen; cyclischen C₅-C₆-(Per)fluoralkylen; und linearen oder verzweigten C₂-C₆-(Per)fluoroxyalkylen, die 1 bis 3 kettenständige Sauerstoffatome umfassen, und X² = F, H; vorzugsweise ist X² F und R"f ist -CF₂CF₃ (MOVE1); - CF₂CF₂OCF₃ (MOVE2); oder
-CF₃ (MOVE3);
(h1) nicht fluorierte C₂-C₈-Olefine (OI), zum Beispiel Ethylen und Propylen;
und
(2) TFE-basierte Copolymere, in denen TFE mit mindestens einem Comonomer copolymerisiert ist, das aus der Gruppe ausgewählt ist, die aus den Klassen (a1), (c1), (d1), (e1), (g1), (h1) und der nachstehenden Klasse (i2) besteht, mit der Maßgabe, dass ein solches Comonomer von TFE verschieden ist;
(i2) Perfluorvinylether, die Cyanidgruppen enthalten.

6. Die Polymerlegierung (PA) nach einem der vorhergehenden Ansprüche mit einem gemäß ASTM D5279-13 bei 200 °C gemessenen Scherspeichermodul von mehr als 1 MPa.

7. Ein Verfahren zur Herstellung der Polymerlegierung (PA) nach einem der Ansprüche 1 bis 6, wobei das Verfahren das Schmelzmischen des aromatischen Polymers (A) und des Vulkanisats (C) umfasst.

8. Ein Artikel, umfassend die Polymerlegierung nach einem der Ansprüche 1 bis 6.

## Revendications

1. Un alliage polymère (PA) qui comprend :
- (a) de 10 à 40 %, de préférence de 15 à 25 % en poids d'un polymère aromatique contenant du soufre [polymère aromatique (A)] ; et
- (b) de 60 à 90 %, de préférence de 75 à 85 % en poids d'une composition de vulcanisat thermoplastique contenant du fluor [vulcanisat (C)] comprenant une phase continue de fluoropolymère thermoplastique et une phase dispersée de fluoroélastomère vulcanisé, ladite composition comprenant :
- i) au moins un fluoropolymère thermoplastique semi-cristallin [polymère (F)] qui est un fluoropolymère partiellement fluoré comprenant des unités récurrentes dérivées du fluorure de vinylidène (VDF) et, éventuellement, des unités récurrentes dérivées d'au moins un monomère fluoré différent du VDF, ledit polymère (F) ayant un point de fusion (Tm₂) d'au moins 120 °C et d'au plus 190 °C, lorsqu'il est déterminé par DSC, à une vitesse de chauffage de 10 °C/min selon ASTM D 3418 ; et
- ii) au moins un (per)fluoroélastomère [élastomère (E)] qui est amorphe,
tous les pourcentages en poids susmentionnés étant rapportés au poids total de l'alliage polymère (PA).

2. L'alliage polymère (PA) selon la revendication 1, dans lequel le polymère aromatique (A) est un poly(sulfure d'arylène) (PAS), de préférence un sulfure de polyphénylène (PPS), ou un polymère sulfone aromatique (SP), de préférence une polysulfone (PSU) ou une polyphénylsulfone (PPSU).

3. L'alliage polymère (PA) selon l'une quelconque des revendications 1 ou 2, dans lequel le polymère (F) comprend des unités récurrentes dérivées d'au moins un monomère fluoré [monomère (MF)] sélectionné dans le groupe constitué de :
(a) des perfluorooléfines en C₂-C₈, telles que le tétrafluoroéthylène et l'hexafluoropropène ;
(b) des fluorooléfines hydrogénées en C₂-C₈, telles que le fluorure de vinyle, le 1,2-difluoroéthylène et le trifluoroéthylène ;
(c) des perfluoroalkyléthylènes répondant à la formule CH₂=CH-Rf₀, dans laquelle Rf₀ est un perfluoroalkyle en C₁-C₆ ;
(d) des fluorooléfines chloro- et/ou bromo- et/ou iodo-C₂-C₆, telles que le chlorotrifluoroéthylène ;
(e) des (per)fluoroalkylvinyléthers répondant à la formule CF₂=CFORf₁, dans laquelle Rf₁ est un fluoro- ou perfluoroalkyle en C₁-C₆, par ex. CF₃, C₂F₅, C₃F₇ ;
(f) des CF₂=CFOX₀ (per)fluoro-oxyalkylvinyléthers, dans lesquels X₀ est un alkyle en C₁-C₁₂, ou un oxyalkyle en C₁-C₁₂, ou un (per)fluorooxyalkyle en C₁-C₁₂ ayant un ou plusieurs groupes éther, tel que le perfluoro-2-propoxy-propyle ;
(g) des (per)fluoroalkylvinyléthers répondant à la formule CF₂=CFOCF₂ORf₂, dans laquelle Rf₂ est un fluoro- ou perfluoroalkyle en C₁-C₆, par ex. CF₃, C₂F₅, C₃F₇ ou un (per)fluorooxyalkyle en C₁-C₆ ayant un ou plusieurs groupes éther, tel que -C₂F₅-O-CF₃ ;
(h) des (per)fluoro-oxyalkylvinyléthers fonctionnels répondant à la formule CF₂=CFOY₀, dans laquelle Y₀ est un alkyle en C₁-C₁₂ ou un (per)fluoroalkyle, ou un oxyalkyle en C₁-C₁₂, ou un (per)fluorooxyalkyle en C₁-C₁₂ ayant un ou plusieurs groupes éther et Y₀ comprenant un groupe acide carboxylique ou sulfonique, sous sa forme acide, halogénure d'acide ou sel ;
(i) des fluorodioxoles, de formule (I) : 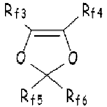 dans laquelle chacun de Rf₃, Rf₄, Rf₅, Rf₆, identiques ou différents les uns des autres, est indépendamment un atome de fluor, un fluoro- ou per(halo)fluoroalkyle en C₁-C₆, comprenant éventuellement un ou plusieurs atomes d'oxygène, par ex. -CF₃, -C₂F₅, -C₃F₇, -OCF₃, -OCF₂CF₂OCF₃.

4. L'alliage polymère (PA) selon selon l'une quelconque des revendications précédentes, dans lequel le polymère (F) comprend :
- au moins 60 % en moles, de préférence au moins 75 % en moles, plus préférablement au moins 85 % en moles d'unités récurrentes dérivées du fluorure de vinylidène (VDF),
- éventuellement, de 0,1 % à 15 % en moles, de préférence de 0,1 % à 12 % en moles, plus préférablement de 0,1 % à 10 % en moles d'unités récurrentes dérivées d'au moins un monomère fluoré différent du VDF, ledit monomère fluoré étant sélectionné dans le groupe constitué du fluorure de vinyle (VF1), du chlorotrifluoroéthylène (CTFE), de l'hexafluoropropylène (HFP), du tétrafluoroéthylène (TFE), du trifluoroéthylène (TrFE) et du perfluorométhylvinyléther (PMVE), tous les % en moles susmentionnés étant rapportés au nombre total de moles d'unités récurrentes du polymère (F).

5. L'alliage polymère (PA) selon la revendication 3, dans lequel l'élastomère (E) comprend :
(1) des copolymères à base de VDF, dans lesquels le VDF est copolymérisé avec au moins un comonomère sélectionné dans le groupe constitué des classes suivantes, à condition que ce comonomère soit différent du VDF :
(a1) des perfluorooléfines en C₂-C₈, telles que le tétrafluoroéthylène (TFE), l'hexafluoropropylène (HFP), l'hexafluoroisobutylène ;
(b1) des oléfines contenant de l'hydrogène en C₂-C₈, telles que des oléfines non fluorées en C₂-C₈ (OI) ;
des oléfines partiellement fluorées en C₂-C₈, le fluorure de vinyle (VF), le trifluoroéthylène (TrFE), des perfluoroalkyléthylènes de formule CH₂ = CH-Rf, dans laquelle Rf est un groupe perfluoroalkyle en C₁-C₆ ;
(c1) des fluorooléfines chloro et/ou bromo et/ou iodo en C₂-C₈ telles que le chlorotrifluoroéthylène (CTFE) ;
(d1) des (per)fluoroalkylvinyléthers de formule CF₂ = CFORf, dans laquelle Rf est un groupe (per)fluoroalkyle en C₁-C₆ ; de préférence des perfluoroalkylvinyléthers (PAVE) de formule ci-dessus dans laquelle Rf est un groupe perfluoroalkyle en C₁-C₆, par ex. CF₃, C₂F₅, C₃F₇ ;
(e1) des (per)fluoro-oxy-alkylvinyléthers de formule CF₂ = CFOX, dans laquelle X est un (per)fluoro-oxyalkyle en C₁-C₁₂ comprenant des atomes d'oxygène caténaires, par ex. le groupe perfluoro-2-propoxypropyle ;
(f1) des (per)fluorodioxoles ayant la formule : 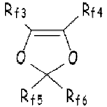 dans laquelle Rf₃, Rf₄, Rf₅, Rf₆, identiques ou différents les uns des autres, sont indépendamment sélectionnés parmi les atomes de fluor et les groupes (per)fluoroalkyle en C₁-C₆, comprenant éventuellement un ou plusieurs atomes d'oxygène, tels que notamment -CF₃, -C₂F₅, -C₃F₇, -OCF₃, - OCF₂CF₂OCF₃ ; de préférence, des perfluorodioxoles ;
(g1) des (per)fluoro-méthoxy-vinyléthers (MOVE, ci-après) ayant pour formule :
CFX² = CX²OCF₂OR"f
dans laquelle R"f est sélectionné parmi les (per)fluoroalkyles en C₁-C₆, linéaires ou ramifiés ; les (per)fluoroalkyles cycliques en C₅-C₆ ; et les (per)fluorooxyalkyles en C₂-C₆, linéaires ou ramifiés, comprenant de 1 à 3 atomes d'oxygène caténaires, et X² = F, H ; de préférence X² est F et R"f est - CF₂CF₃ (MOVE1) ; -CF₂CF₂OCF₃ (MOVE2) ; ou
-CF₃ (MOVE3) ;
(h1) des oléfines non fluorées en C₂-C₈ (OI), par exemple l'éthylène et le propylène ;
et
(2) des copolymères à base de TFE, dans lesquels le TFE est copolymérisé avec au moins un comonomère sélectionné dans le groupe constitué des classes (a1), (c1), (d1), (e1), (g1), (h1), et de la classe (i2) ci-dessous, à condition que ce comonomère soit différent du TFE ;
(i2) des éthers perfluorovinyliques contenant des groupes cyanure.

6. L'alliage polymère (PA) selon l'une quelconque des revendications précédentes, ayant un module de conservation en cisaillement mesuré selon ASTM D5279-13 à 200 °C supérieur à 1 MPa.

7. Un procédé de préparation de l'alliage polymère (PA) selon l'une quelconque des revendications 1 à 6, ledit procédé comprenant le mélange à l'état fondu du polymère aromatique (A) et du vulcanisat (C).

8. Un article comprenant l'alliage polymère selon l'une quelconque des revendications 1 à 6.
